Europäisches Patentamt

European Patent Office

Office européen des brevets

(11) Publication number: **0 386 266**
**A1**

(12) **EUROPEAN PATENT APPLICATION**
published in accordance with Art.
158(3) EPC

(21) Application number: **89909853.7**

(22) Date of filing: **01.09.89**

(86) International application number:
**PCT/JP89/00904**

(87) International publication number:
**WO 90/02642 (22.03.90 90/07)**

(51) Int. Cl.5: **B29B 11/16, B29B 9/14,**
**C08J 5/04**

(30) Priority: **02.09.88 JP 218495/88**
**02.09.88 JP 218498/88**
**29.03.89 JP 74954/89**

(43) Date of publication of application:
**12.09.90 Bulletin 90/37**

(84) Designated Contracting States:
**AT DE FR GB IT SE**

(71) Applicant: **Asahi Kasei Kogyo Kabushiki**
**Kaisha**
**2-6, Dojimahama 1-chome Kita-ku**
**Osaka-shi Osaka 530(JP)**

(72) Inventor: **MURAKAMI, Naoyuki**
**65-12, Ibukino Midori-ku**
**Yokohama-shi Kanagawa 227(JP)**
Inventor: **KATAYOSE, Teruo**
**1-14-17, Miyamae Sakura-shi**
**Chiba 285(JP)**

(74) Representative: **Strehl, Schübel-Hopf,**
**Groening**
**Maximilianstrasse 54 Postfach 22 14 55**
**D-8000 München 22(DE)**

(54) **FIBER-REINFORCED THERMOPLASTIC RESIN SHEET OR PELLET.**

(57) The title sheet and pellet have uniform mechanical properties and excellent surface smoothness and are prepared from a resin composition comprising 30 to 80 wt % of a thermoplastic resin, 70 to 20% of reinforcing fibers of 3 to 20 μm in diameter and 1 to 50 mm in length and, if desired, fillers. They have a basis weight variation coefficient of up to 15. These are useful for various uses such as automobile parts.

F I G. 2

# FIBER-REINFORCED THERMOPLASTIC RESIN SHEET OR PELLETS

## TECHNICAL FIELD

The present invention relates to a fiber-reinforced thermoplastic resin sheet with excellent surface smoothness, or pellets capable of providing extruded goods, injection-molded articles and the like having excellent surface smoothness, and it relates to a sheet excellent in uniformity of mechanical properties and resistance to chemicals.

## BACKGROUND ART

There have heretofore been investigated various fiber-reinforced thermoplastic resin sheets composed of a thermoplastic resin and reinforcing fiber. Examples thereof are fiber-reinforced thermoplastic resin sheets having a swirl mat made of glass long fibers as a reinforcing layer.

A stamped product obtained by use of this reinforced sheet is, however, very poor in surface smoothness and not good in deep drawing properties.

As thermoplastic resin sheets free from these defects, there are, for example: the sheet-like material for molding disclosed in Jap. Pat. Appln. Kokai (Laid-Open) No. 57-28135 which comprises (a) a basic mixture consisting of 20 to 95% by weight of reinforcing fiber and 80 to 5% by weight of a powdery thermoplastic resin, (b) polyolefin pulp in an amount of 5 to 25% by weight based on the weight of the basic mixture, (c) a binding material in an amount of 5 to 30% by weight based on the weight of the basic mixture, and (d) at least one flocculant in an amount of 0.2 to 10% by weight based on the weight of the basic mixture; the reinforced polymer complex disclosed in U.S.P. 4426470 which is obtained by A. forming a dilute slurry consisting of (1) a solid heat-fusible organic polymer, (2) a reinforcing material and (3) a latex binder containing an anionic or cationic bounded electrical charge, B. coagulating the slurry with an inorganic or organic flocculant with stirring, C. collecting a solid of mat form, and D. drying the solid; the fiber-reinforced sheet disclosed in U.S.P. 4543288 which comprises 20 to 60% by weight of reinforcing fibers which have a high modulus of elasticity and most of which have a length of 7 to 50 mm and a diameter of 13 μm or less, and 40 to 80% by weight of a thermoplastic material; and the like.

In addition, there have been investigated various fiber-reinforced thermoplastic resin pellet structures composed of a thermoplastic resin and reinforcing fiber which are excellent in mechanical properties. Typical examples thereof are pellet structures, as disclosed in Jap. Pat. Pub. No. 63-37694, Jap. Pat. Appln. Kokai (Laid-Open) No. 63-252724, U.S.P.

4,439,387, etc. produced by a pultrusion method in which a bundle of continuous and parallel reinforcing filaments (a roving) is impregnated and coated with a thermoplastic resin and cut into a predetermined length.

The fiber-reinforced thermoplastic resin sheets described above, however, do have neither uniformity of mechanical properties nor resistance to chemicals.

Additionally, since the above-mentioned fiber-reinforced thermoplastic resin pellets have a structure in which a bundle of continuous reinforcing filaments is impregnated and coated with a thermoplastic resin, the wettability between the filaments and the resin is not sufficient. Therefore, an injection-molded or extrusion-molded product produced by use of said pellets is good in mechanical properties but has a nonuniform fiber distribution and an insufficient surface smoothness. Thus, it is not satisfactory.

DISCLOSURE OF THE INVENTION

In consideration of such conditions, the present inventors earnestly investigated the relationship between the coefficient of variation of basis weight and the uniformity of mechanical properties of a fiber-reinforced thermoplastic resin sheet and the relationship between the coefficient of variation of basis weight of fiber-reinforced thermoplastic resin pellets and the mechanical properties and surface smoothness of a molded product obtained from said pellets by injection molding or the like. The present inventors consequently found that there is a very close correlation between the coefficient of variation of basis weight and the mechanical properties and the like and that a sheet having a small coefficient of variation of basis weight is excellent also in resistance to chemicals, whereby the present invention was accomplished.

That is, the present invention provides a fiber-reinforced thermoplastic resin sheet or pellets which comprises 30 to 80% by weight of a thermoplastic resin, 70 to 20% by weight of reinforcing fiber having a fiber diameter of 3 to 20 μm and a fiber length of 1 to 50 mm, and optionally a filler (fillers), and have a coefficient of variation of basis weight of 15 or less.

BRIEF DESCRIPTION OF THE DRAWINGS

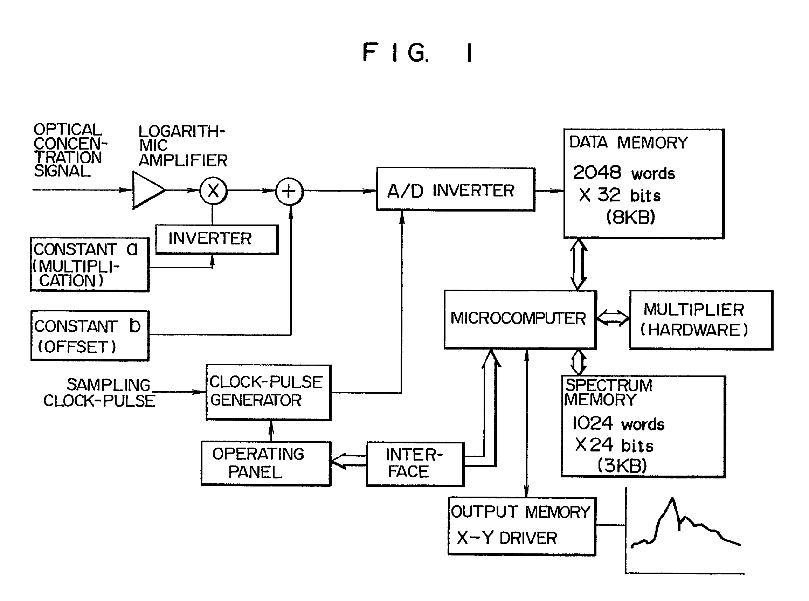

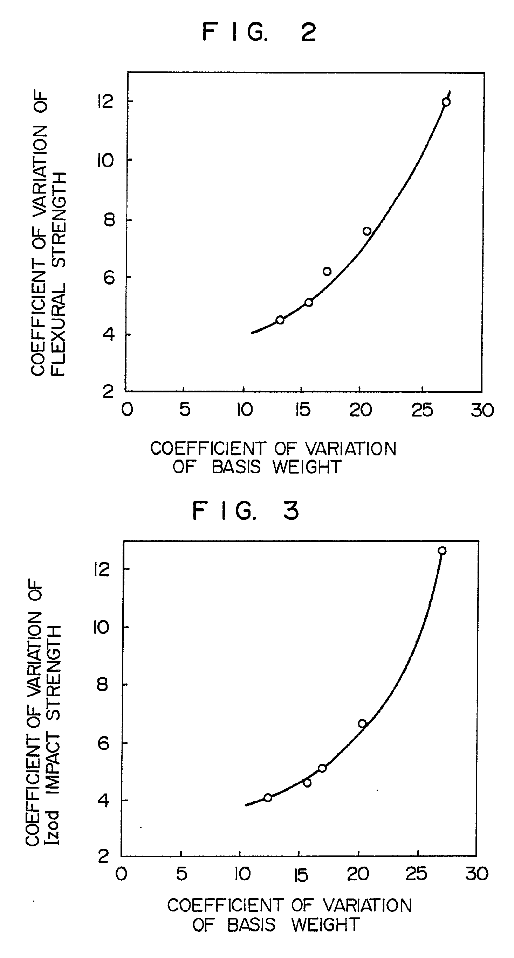

Fig. 1 is a block diagram of a system for subjecting coefficient of variation of basis weight to operation. Fig. 2 is a graph showing the relationship between coefficient of variation of basis weight and coefficient of variation of flexural strength. Fig. 3 is a graph showing the relationship between coefficient of variation of basis weight and coefficient of variation of lzod impact strength.

BEST MODE FOR CARRYING OUT THE INVENTION

The thermoplastic resin used in this invention includes polyolefins such as polyethylenes, polypropylenes, etc.; styrene resins such as polystyrenes, rubber-reinforced polystyrenes, acryronitrile-styrene copolymers, SBS resins, etc.; polyester resins such as polyethylene terephthalates, polybutylene terephthalates, etc.; polyamide resins such as nylon 6, nylon 66, nylon 46, etc.; polyether resins such as polyphenylene ethers, modified polyphenylene ethers, etc.; refractory resins such as polyoxymethylenes, polycarbonates, polyarylates, polyphenylene sulfides, polysulfones, polyether sulfones, polyether ether ketones, polyether amides, etc.; and blended resins thereof, for example, polycarbonate/polybutylene terephthalate, polycarbonate/ABS, polyphenylene ether/polybutylene terephthalate, polyphenylene ether/polyamide, etc.

Although basically, as the thermoplastic resin used in the present invention, any one may be used, crystalline thermoplastic resins, in particular, the general-purpose crystalline thermoplastic resins, are preferable because the effect of reinforcement with fiber is remarkable, and thermoplastic resins which are powder or granules at a polymerization step for the resin are also preferable because they are inexpensive resin materials.

Preferable examples of the thermoplastic resin used in the present invention are polyolefins such as polyethylenes, polypropylenes, etc., polyester resins such as polyethylene terephthalates, polybutylene terephthalates, etc., polyamide resins such as nylon 6, nylon 66, nylon 46, etc., polyether resins such as polyphenylene ethers, modified polyphenylene ethers, etc., polyoxymethylenes, polycarbonates, polyphenylene sulfides, and blended resins thereof.

As the reinforcing fiber used in the present invention, any one may be used so long as it has a tensile modulus higher than that of the thermoplastic resin used in this invention and a melting or softening point 50°C higher than that of said resin.

The reinforcing fiber includes, for example, inorganic fibers such as glass fiber, carbon fiber, ceramic fiber, mineral fiber, etc., metal fibers of stainless steel, brass, etc., ultra-high-molecular-weight polyethylene fiber, polyoxymethylene fiber, polyvinyl alcohol fiber, mesomorphic aromatic polyester fiber, polyethylene terephthalate fiber, aramide fibers such as poly-p-phenylene terephthalamide, poly-m-phenylene isophthalamide, etc., polyamide fibers such as nylon 6, nylon 66, etc., polyphenylene benzothiazole fiber, polyacryronitrile fiber, and cellulose fiber.

The reinforcing fiber used in this invention is chosen in consideration of mechanical properties and heat resistance required of the sheet or pellets of this invention, combination with the thermoplastic resin constituting the composition. Preferable examples thereof are inorganic fibers such as glass fiber, carbon fiber, ceramic fiber, mineral fiber, etc., metal fibers of stainless steel, brass, etc., mesomorphic aromatic polyester fibers, poly-p-phenylene terephthalamide fiber, poly-m-phenylene isophthalamide fiber, polyphenylene benzothiazole fiber, and the like.

The diameter of the reinforcing fiber is 3 to 20 μm. When it is less than 3 μm, no reinforcing effect is brought about in the resulting fiber-reinforced thermoplastic resin sheet or pellets. When it exceeds 20 μm, the surface smoothness of said sheet or pellets is deteriorated. Therefore, both of such diameters are not desirable.

The length of the reinforcing fiber is 1 to 50 mm, preferably 3 to 25 mm. When it is less than 1 mm, no reinforcing effect is brought about in the resulting fiber-reinforced thermoplastic resin sheet or pellets. When it exceeds 50 mm, the surface smoothness of said sheet or pellets is deteriorated. Therefore, both of such diameters are not desirable.

The proportion of the reinforcing fiber blended with the thermoplastic resin is 70 to 20% by weight, preferably 30 to 50% by weight, based on the total weight of them. When it is less than 20% by weight, no sufficient reinforcing effect of the fiber is obtained. When it exceeds 70% by weight, a molded product of fiber reinforced thermoplastic resin obtained by injection molding or the like is brittle. Therefore, both of such blending proportions are not desirable. When the blending amount of the reinforcing fiber exceeds 60% by weight, the fiber-reinforced thermoplastic resin sheet becomes brittle in some cases, depending on a method for producing said sheet, and therefore care should be taken.

In addition, a sheet obtained by using a mixture mainly composed of short fibers and containing a specific amount of longer fibers is excellent in both surface smoothness and deep drawing properties.

That is, more specifically, it is preferable to use mixed fiber consisting of 60 to 95% by weight of fibers having a fiber diameter of 3 to 13 μm and a fiber length of 3 to 7 mm and 40 to 5% by weight of fibers having a fiber diameter of 6 to 20 μm and a fiber length of 7 to 50 mm.

If necessary, the fiber-reinforced thermoplastic resin sheet or pellets of the present invention may contain either at least one inorganic or organic filler(s).

The fiber-reinforced thermoplastic resin sheet containing the filler(s) has a further improved surface smoothness. In the case of the pellets, the surface smoothness of an injection-molded or extrusion-molded product thereof is also improved.

The adding amount of the filler(s) is in the range of 1 to 50% by weight, preferably 5 to 30% by weight, where the mechanical properties of an injection-molded product, extrusion-molded product or the like obtained by use of the fiber-reinforced thermoplastic resin sheet or said pellets are not deteriorated. The filler(s) is used preferably in such an amount that the coefficient of linear expansion of the fiber-reinforced thermoplastic resin sheet or pellets containing the filler(s) is 90% or less of that of a composition composed of two components, i.e., said filler(s) and the thermoplastic resin constituting said sheet or pellets.

The coefficient of linear expansion in this invention is a value measured at a heating rate of 10°C/min and at a temperature in the range from 30°C to a temperature 30°C lower than the melting point or softening point of the thermoplastic resin.

The filler(s) includes, for example, inorganic powders of calcium carbonate, magnesium carbonate, aluminum hydroxide, magnesium hydroxide, zinc oxide, magnesium oxide, aluminum silicate, talc, wollastonite, silicic acid, calcium silicate, aluminum silicate, mica, glass balloon, quartz balloon, graphite, boron, alumina, silicon carbide, boron carbide, boron oxide, boron nitride, silica, beryllium, quarz, silicon nitride, beryllium oxide, aluminum nitride, etc.; inorganic whiskers of asbestos, potassium titanate, carbon, graphite, boron, alumina, silicon carbide, boron carbide, boron oxide, boron nitride, silica, beryllium, quartz, silicon nitride, etc.; microcellulose; powder of thermosetting resins, aramide pulp; and very fine fibers of thermoplastic resins having a melting point higher than that of the matrix resin of the fiber-reinforced thermoplastic resin composition, e.g. very fine polyethylene terephthalate fiber, and powder thereof.

The filler(s) used in the present invention may have any shape. When it is spherical or nearly spherical, namely, when its aspect ratio is less than 3, it is sufficient that its equivalent volume diameter is about a quater or less of the diameter of the reinforcing fiber. When the filler has a fibrous shape, namely, its aspect ratio is 3 or more, it is sufficient that its fiber diameter is about a quater or less of the diameter of the reinforcing fiber. When the diameter of the filler has a certain distribution, it is sufficient that the fiber diameter of 60% by weight or more, preferably 70% by weight or more, of the filler is a quarter or less of the diameter of the reinforcing fiber.

The aspect ratio is the ratio of the major axis to the minor axis in the case where the filler is spherical or nearly spherical. When the filler has a fibrous shape, its aspect ratio is defined as the ratio of the fiber length to the fiber diameter.

Here, the term "equivalent to volume diameter" means the diameter of a sphere having the same volume as that of the filler having an optional shape.

The average equivalent volume diameter is calculated as follows. The particle size distribution is measured by sieve analysis; then, on the basis of the analysis results, the arithmetic means of the difference between adjacent meshes is taken as the typical particle size of particles in this partition; the particle size corresponding to 50% on a particle size cumulative distribution curve is determined on a weight basis by use of the formula of Rosin-Rammler; ten particles having such a particle size are collected from sieve analysis sample; their individual diameters are converted to the equivalent volume diameter; the arithmetic mean of the values thus obtained is taken as the average equivalent volume diameter.

Various conventional additives such as flame retardants, heat stabilizers, ultraviolet absorbers, colorants, etc. may be added to the fiber-reinforced thermoplastic resin sheet or pellets of this invention so long as they do not deteriorate the mechanical properties of said sheet or the like.

Furthermore, a thermoplastic resin having adhesive properties imparted by introduction of a functional group by maleinized treatment may be added in a required amount in order to improve the mechanical properties.

As another means for improving the mechanical properties of the fiber-reinforced thermoplastic resin sheet or pellets, a coupling agent such as silane may be used in molding the sheet or the like.

The reinforcing fiber in the sheet or pellets of the present invention is present therein preferably in discrete state. The term "discrete state" means a state in which fibers having a predetermined length (3 to 20 mm) are present in the thermoplastic resin not in a bundle but in substantially loosen state, preferably in a state wherein substantially each fiber is separate from the others. However, the fibers may be present in a state in which they cross each other at least partially.

The shape of the fiber-reinforced thermoplastic resin pellets of the present invention is generally cylindrical (the section being a circle or an elipse) or columnar (the section being a triangle, rectangle or polygon). If necessary, it may be a shape composed of a plurality of cylinders or the like which has depressions. The equivalent to volume diameter for the pellets is 3 to 8 mm, preferably 4 to 6 mm, and the length of the pellets is 3 to 20 mm, preferably 5 to 10 mm.

When the equivalent volume diameter and the length which are factors determining the size of the pellets are outside the above ranges, the following troubles tend to occur. In melt-kneading the pellets by means of an extruder, injection-molding machine or the like, clogging with the pellets in a screw portion, a variation of discharge, etc. tend to occur depending on conditions. Particularly when both the equivalent volume diameter and the length are large, reinforcing fibers tend to be broken during molding. Therefore, it is preferable to choose conditions of the melt-kneading properly.

Although the thickness of the fiber-reinforced resin sheet is not critical, it is usually 0.5 to 20 mm.

The coefficient of variation of basis weight in the present invention is a coefficient indicating the uniform-dispersability of reinforcing fiber in fiber-reinforced thermoplastic resin sheet or pellets and is specified using the equation (1) shown below. For achieving the object of the present invention, the coefficient should be 15 or less, preferably 10 or less. Of course, because of its properties, the smaller the coefficient of variation of basis weight, the better.

In the production process described hereinafter, the lower limit of the coefficient is about 2 from an industrial (economic) viewpoint.

A coefficient of variation of basis weight of 15 or less indicates a good dispersibility of reinforcing fiber in fiber-reinforced thermoplastic resin sheet or pellets and reduction in intertwining of fibers and uneven-distribution of the resin. That is, in the case of a sheet, such a value of the coefficient indicates improvement of its surface smoothness and mechanical properties, and in the case of pellets, it means that there can be obtained injection-molded or extrusion-molded product having an improved surface smoothness and a considerably uniform quality. When the coefficient of variation of basis weight is 10 or less, this tendency becomes more marked. Therefore, it is desirable.

A coefficient of variation of basis weight of more than 15 indicates deterioration of the dispersibility of reinforcing fiber in fiber-reinforced thermoplastic resin sheet or pellets. That is, in the case of a sheet, it indicates deterioration of the surface smoothness and the uniformity of mechanical properties, and in the case of pellets, it indicates deterioration of the surface smoothness of injection-molded or extrusion-molded product of the pellets and an increase of nonuniformity of the quality of the product.

$$V = \frac{\sigma_W}{M_W} \times 100 \qquad \ldots\ldots\ldots\ldots (1)$$

wherein V: coefficient of variation of basis weight

M: average value of basis weight (g/m2) of sheet or pellets

$\sigma_W$: standard deviation of the basis weight

When the coefficient of variation of basis weight is determined for pellets, a compressin-molded sheet of 2 mm thickness and 12 cm square is produced by means of a press (in the case of a sample which can be collected in the form of a sheet of 1 - 4 mm thickness before pelletization, this sheet is used), after which the coefficient of variation of basis weight of the compression-molded sheet is determined in the manner described below and is taken as the coefficient of variation of basis weight of the pellets.

Between the optical concentration Y of X-ray film made of the sheet and the basis weight W (g/m²) of the sheet corresponding thereto, the following equation (2) holds:

$$W = -A + \log Y + B \qquad \ldots\ldots\ldots\ldots (2)$$

wherein both A and B are positive constants.

On the basis of the equation (2), the coefficient of variation of basis weight of the sheet is determined by operation by means of a microcomputer according to the block diagram shown in Fig. 1 by using a formation discriminator developed by Shizuoka Prefecture Pulp & Paper Industrial Research Institute (see Report by Shizuoka Prefecture Paper & Pulp Industrial Research Institute, No. 33, p. 9 - p. 21).

An X-ray film was taken by using fiber-reinforced thermoplastic resin sheet or pellets by irradiation with soft X-rays under the following conditions: ray source for the irradiation, SOFTEX I-1005; film used, FUJI X-RAY FILM; irradiation conditions, voltage 32 KVP, electric current 3 mA, time 140 seconds.

The thickness of fiber-reinforced thermoplastic resin sheet for the measurement, however, ranges from 1 to 4 mm.

Conditions for measuring the optical concentration by use of the X-ray film are as follows: the size of a detected spot 100 μm x 100 μm, scanning speed

60 mm/min, measuring wavelength 93.12 mm, sampling distance 45.46 μm, number of samplings 2048.

The uniformity of mechanical properties is judged as follows: flexural strength and lzod impact strength are chosen as physical properties serving as criteria of the uniformity; using the average value Pm of each of the two physical properties and the standard deviation $\sigma_m$ thereof, the coefficient of variation U is calculated according to the equation (3) described below; the uniformity of mechanical properties is judged from whether the calculated value of the coefficient of variation U is large or small.

$$U = \frac{\sigma_m}{P_m} \times 100 \qquad \ldots\ldots\ldots\ldots \ (3)$$

Criteria of the uniformity of mechanical properties are chosen case by case and it is difficult to determine them unequivocally, but it is found from experience that taking a value of U of 5 or less as a measure, the mechanical properties may be judged to be uniform when the value of U is 5 or less.

Mechanical properties are affected also by the degree of orientation of reinforcing fibers in pellets for molding, and a product obtained when the orientation is uniaxial orientation is superior in mechanical properties to a product obtained when the orientation is random orientation.

For producing the fiber-reinforced thermoplastic resin sheet of this invention, various conventional sheet producing techniques can be utilized, except that as described hereinafter, removal of greige goods for the reinforcing fiber and technique of stock preparation such as split-treating should be added.

There is, for example, a method which comprises producing raw fabric for fiber-reinforced thermoplastic resin sheet from a thermoplastic resin and reinforcing fiber by a production process of dry non-wooven fabric, and then melting said resin by means of a hot press to unite the same with the reinforcing fiber in one body.

There is also a method which comprises producing raw fabric for fiber-reinforced thermoplastic resin sheet from a powdery thermoplastic resin and reinforcing fiber by a paper making method, and melting said resin by means of a hot press such as belting press in an in-line or off-line manner to unite the same with the reinforcing fiber in one body, as disclosed in Jap. Pat. Appln. Kokai (Laid-Open) No. 57-28135, U.S.P. 4,426, 470, etc.

Whichever method is employed, for example, when a sheet of 0.5 mm or more in thickness is produced, plural sheets of raw fabric should be laminated and passed through a hot press.

In laminating sheets, different blending proportions of a reinforcing fiber can be employed in a skin layer and a core layer, or different thermoplastic resins can be used in a skin layer and a core layer.

Fiber-reinforced thermoplastic resin pellets can be produced by pelletizing the sheet of this invention by a conventional technique.

For producing fiber-reinforced thermoplastic resin sheet or pellets having a coefficient of variation of basis weight of 15 or less, it is necessary that (1) greige goods used for increasing the bulk density of reinforcing fiber should be completely removed. For example, when the reinforcing fiber coagulated with water-soluble greige goods is composed of chopped strands, a means for removing the greige goods is, for example, a method which comprises immersing the strands in a greige goods removing solution having a high concentration at first, concentrating and dehydrating the same by use of a decker, valveless filter or the like, diluting the concentrated and dehydrated roving slurry with water, and then splitting the same by means of a high-mixer, long-handled sword type beater or the like. The point of the split-treating is to choose conditions under which cutting, re-coagulation and intertwining of fibers do not occur. What is more important is that (2) the reinforcing fiber subjected to the split-treating and a thermoplastic resin (usually powder) are kept in a uniformly dispersed state until the formation of a web. Examples of means for this purpose are as follows. ① In a paper-making step, the concentration of slurry is generally adjusted so as to become lower in later stages but the concentrations of paper-making additives such as dispersant, thickener, etc. are kept constant. ② The concentration of slurry at the time of the formation of a web is kept as low as possible. ③ A device is invented for preventing reinforcing fibers from coagulating or intertwining with one another in a slurry transporting line including a pump, pipings, etc.


EXAMPLES

The present invention is explained below in more detail with examples but is not limited thereto. Example 1 and Comparative Examples 1, 2, 3, and 4

There were prepared (a) a 3.0 wt% slurry containing polypropylene powder of MFR14 and an amine type nonionic surfactant in an amount of 0.2% by weight based on the polypropylene, (b) a 1.0 wt% reinforcing-fiber slurry containing reinforcing fiber consisting of glass fiber having a fiber diameter of 10 μm and a fiber length of 6 mm, and a polyethylene glycol ester type dispersant in an amount of 0.15% by weight based on the weight of the reinforcing fiber. Then, the (a) and the (b) were mixed in the ratio of 1 : 3 to prepare a 1.5 wt% slurry containing the polypropylene and the reinforcing fiber both in a proportion of 50% by weight, after which this slurry was diluted with water containing 0.03% by weight of a polyethylene glycol ester type dispersant, to adjust its concentration to 0.4% by weight, and then made into a web having a basis weight of 260 g by means of a hand making sheet machine.

Split-treating of the reinforcing fiber was carried out in the following manner.

Glass fiber having a fiber diameter of 10 μm and a fiber length of 6 mm was added to water containing 0.5% by weight of a lauryl ether type penetrating agent (removal of greige good) in an amount of 10% by weight based on the weight of the water to prepare a 10 wt% reinforcing-fiber slurry, after which this dilute slurry was dehydrated and concentrated by means of a valveless filter to prepare a cake of the reinforcing fiber having a water content of about 50% by weight. The cake was diluted with water to obtain a 10 wt% reinforcing-fiber slurry again, and this slurry was treated by means of a high-mixer for a short time, thereafter further diluted with water to adjust its concentration to 5% by weight, and then subjected to split-treating by using a long-handled sword type beater.

Using this slurry as a base, there was prepared a 1.0 wt% reinforcing-fiber slurry containing the polyethylene glycol ester type dispersant in an amount of 0.15% by weight based on the weight of the reinforcing fiber.

In this case, five kinds of webs having different formations were produced by controlling the degree of stirring in the sheet machine.

Then, for each formation, 10 pieces of the web having the same formation were laminated, dehydrated by use of a press, dried subsequently at 120°C for 1 hour, heated for 16 minutes by means of a sheet forming press under conditions of a temperature of 190°C and a pressure of 10 kg/cm², and then cooled for 20 minutes under conditions of a temperature of 25°C and a pressure of 15 kg/cm² to form a fiber-reinforced thermoplastic resin sheet of 2 mm in thickness. Characteristics of these sheets are as shown in Table 1, and the relationship between the coefficient of variation of basis weight and the uniformity of mechanical properties are as shown in Fig. 2 and Fig. 3.

Table 1

| Example<br><br>Comparative<br>Example | Basis weight | | Mechanical properties | | | |
|---|---|---|---|---|---|---|
| | Basis<br>weight<br><br>g/m$^2$ | Coeffi-<br>cient of<br>variation<br>of Basis<br>weight | Flexural strength<br>ASTM D-790 | | Izod impact strength<br>ASTM D-256 | |
| | | | Flexural<br>strength<br>kg/cm$^2$ | Coefficient<br>of variation<br>of flexural<br>strength | Notched<br>impact<br>strength<br>kg-cm/cm | Coefficient of<br>variation of<br>Izod impact<br>strength |
| Example 1 | 2550 | 13.5 | 960 | 4.5 | 50 | 4.0 |
| Comparative<br>Example    1 | 2570 | 27.1 | 970 | 12.0 | 52 | 12.5 |
| 〃    2 | 2490 | 20.4 | 980 | 7.5 | 56 | 6.5 |
| 〃    3 | 2610 | 17.2 | 1050 | 6.2 | 59 | 5.0 |
| 〃    4 | 2650 | 15.7 | 1080 | 5.0 | 58 | 4.5 |

– Cont'd –

Note: In the chemical resistance column, the term "before toluene immersion" means that a test piece was not immersed in toluene, and the term "after toluene immersion" means that a test piece was immersed in toluene at 23°C for consecutive 30 days. The physical properties of a test piece after toluene immersion were measured immediately after wiping off toluene adhering to the surface of the test piece with gauze after taking out of toluene.

Table 1 (Cont'd)

| Chemical resistance | | | |
|---|---|---|---|
| Flexural strength ASTM D-790 | | Flexural modulus ASTM D-790 | |
| Before toluene immersion kg/cm$^2$ | After toluene immersion kg/cm$^2$ | Before toluene immersion × 10 kg/cm$^2$ | After toluene immersion × 10 kg/cm$^2$ |
| 960 | 620 | 5.0 | 2.2 |
| 970 | 390 | 6.1 | 1.2 |
| 980 | 440 | 6.5 | 2.0 |
| 1050 | 630 | 5.3 | 1.9 |
| 1080 | 650 | 5.6 | 2.5 |

Examples 2 and 3

There were prepared (a) a 3.0 wt% slurry containing polypropylene powder of MFR14 and a polyoxyethylene type nonionic surfactant in an amount of 0.1% by weight based on the weight of the polypropylene, and (b) a 1.0 wt% reinforcing-fiber slurry containing reinforcing fiber consisting of glass fiber having a fiber diameter of 10 μm and a fiber length of 13 mm, and a polyethylene glycol ester type dispersant in an amount of 0.10% by weight based on the weight of the reinforcing fiber. Then, the (a) and the (b) were mixed in the ratio of 1 : 3 to prepare a 1.5 wt% slurry containing the polypropylene and the reinforcing fiber both in a proportion of 50% by weight, and this slurry was diluted with water containing 0.03% by weight of a polyethylene glycol ester type dispersant, to adjust its concentration to 1.0% by weight. Thereafter, a predetermined amount of the diluted slurry was fed using a slurry pump, after which in a pipe line on the way, a polyoxyethylene type nonionic surfactant was added in an amount of 0.1% by weight based on the polypropylene contained in this slurry, and at the same time, a predetermined amount of air was fed. Subsequently, the diluted slurry was made into a slurry containing bubbles at an expansion ratio of about 4 by means of a static mixer, and then this slurry was fed to a hand making sheet machine to form a web having a basis weight of 520 g. Split-treating of the reinforcing fiber was carried out in the same manner as in Example 1.

In this case, two kinds of webs having different formations were produced by varying the share rate in the static mixer by varying the discharge rate of the slurry pump.

Then, for each formation, five pieces of the web having the same formation were laminated, dehydrated by use of a press, dried subsequently at 120°C for 1 hour, heated for 16 minutes by means of a sheet forming press under conditions of a temperature of 190°C and a pressure of 10 kg/cm2, and then cooled for 20 minutes under conditions of a temperature of 25°C and a pressure of 15 kg/cm2 to form a fiber-reinforced thermoplastic resin sheet of 2 mm in thickness.

Characteristics of these sheets are as shown in Table 2.

Table 2

| Example | Basis weight | | Mechanical properties | | | | Chemical resistance | | | |
| --- | --- | --- | --- | --- | --- | --- | --- | --- | --- | --- |
| | Basis weight g/m² | Coefficient of variation of basis weight | Flexural strength ASTM D-790 | | Izod impact strength ASTM D-256 | | Flexural strength ASTM D-790 | | Flexural modulus ASTM D-790 | |
| | | | Flexural strength | Coefficient of variation of flexural strength | Notched impact strength | Cefficient of variation of Izod impact strength | Before toluene immersion kg/cm² | After toluene immersion kg/cm² | Before toluene immersion × 10 kg/cm² | After toluene immersion × 10 kg/cm² |
| 2 | 2630 | 7.5 | 1680 | 3.3 | 65 | 3.5 | 1680 | 1100 | 7.5 | 3.7 |
| 3 | 2590 | 4.5 | 1210 | 3.0 | 56 | 3.2 | 1210 | 810 | 6.5 | 3.1 |

Example 4

There were prepared (a) a 3.0 wt% slurry containing polypropylene powder of MFR4 and an amine type nonionic surfactant in an amount of 0.2% by weight based on the weight of the polypropylene, and (b) a 1.0 wt% reinforcing-fiber slurry containing a mixture of 30 parts by weight of glass fiber having a fiber diameter of 10 μm and a fiber length of 6 mm and 25 parts by weight of potassium titanate whisker having a fiber diameter of 0.2 to 0.5 μm and a fiber length of 10 to 20 μm, and a polyethylene glycol ester type dispersant in an amount of 0.15% by weight based on the weight of the mixture. Then, the (a) and the (b) were mixed in the ratio of 1 : 3 to prepare a 1.5 wt% slurry containing the polypropylene, the glass fiber and the potassium titanate whisker in proportions of 50% by weight, 27% by weight and 23% by weight, respectively, after which this slurry was diluted with water containing 0.03% by weight of a polyethylene glycol type dispersant to adjust its concentration to 0.3% by weight, and then made into a web having a basis weight of 290 g by means of a hand making sheet machine.

Split-treating of the reinforcing fiber was carried out in the same manner as in Example 1.

Next, 10 pieces of the web were laminated, dehydrated by use of a press, dried subsequently at 120°C for 1 hour, heated for 16 minutes by means of a sheet forming press under conditions of a temperature of 210°C and a pressure of 10 kg/cm$^2$, and then cooled for 20 minutes under conditions of a temperature of 25°C and a pressure of 15 kg/cm$^2$ to form a fiber-reinforced thermoplastic resin sheet of 2 mm in thickness, whose coefficient of variation of basis weight was 13.

Characteristics of this sheet are as shown in Table 3. A sheet consisting of the polypropylene resin and potassium titanate whisker was produced by a paper-making method and its coefficient of linear expansion was measured to be 40 x 10$^{-6}$ cm/cm·°C, which was 17% of the coefficient of linear expansion of the polypropylene (230 x 10$^{-6}$ cm/cm·°C). The surface smoothness was evaluated in terms of a value measured in accordance with the distinctness of image specified in JIS K7105, and the fiber-reinforced thermoplastic resin sheet was judged good in surface smoothness when said value was 10% or more. The measurement was carried out by a reflection method and its conditions were as follows: angle of reflection 45°, width of optical combs 0.5 mm.

Table 3

| Characteristics | Specification | Unit | Numerical value |
|---|---|---|---|
| Tensile break strength | ASTM D 638 | kg/cm$^2$ | 550 |
| Izod impact strength (notched) | ASTM D 256 | kg·cm/cm | 50 |
| Distinctness of image | JIS K 7105 | % | 20 |

Example 5

There were prepared (a) a 3.0 wt% slurry containing polyethylene terephthalate fiber and a polyoxyethylene type nonionic surfactant in an amount of 0.1% by weight based on the weight of the fiber, and (b) a 1.0 wt% reinforcing-fiber slurry containing a mixture of 21 parts by weight of glass fiber having a fiber diameter of 10 μm and a fiber length of 13 mm and 30 parts by weight of carbonaceous whisker having a fiber diameter of 0.05 to 0.5 μm and a fiber length of 20 to 200 μm, and a sodium polyacrylate type thickening agent in an amount of 12% by weight based on the weight of the mixture. Then, the (a) and the (b) were mixed in the ratio of 1 : 3 to prepare a 1.5 wt% slurry containing the polyethylene terephthalate fiber, the glass fiber and the carbonaceous whisker in proportions of 50% by weight, 21% by weight and 29% by weight, respectively, after which this slurry was diluted with water containing 0.03% by weight of a sodium polyacrylate type thickening agent to adjust its concentration to 0.3% by weight, and then made into a web having a basis weight of 225 g by means of a hand making sheet machine.

Split-treating of the reinforcing fiber was carried out in the same manner as in Example 1.

Next, 16 pieces of the web were laminated, dehydrated by use of a press, dried subsequently at 120°C for 1 hour, heated for 18 minutes by means of a sheet forming press under conditions of a temperature of 300°C and a pressure of 10 kg/cm², and then cooled for 22 minutes under conditions of a temperature of 25°C and a pressure of 15 kg/cm² to form a fiber-reinforced thermoplastic resin sheet of 2 mm in thickness, whose coefficient of variation of basis weight was 10.

Characteristics of the sheet are as shown in Table 4. The coefficient of linear expansion of a sheet made of polyethylene terephthalate and the carbonaceous whisker was 45 x 10⁻⁶ cm/cm·°C, which was 23% of the coefficient of linear expansion of polyethylene terephthalate (200 x 10⁻⁶ cm/cm·°C).

Table 4

| Characteristics | Specification | Unit | Numerical value |
|---|---|---|---|
| Tensile break strength | ASTM D 638 | kg/cm² | 1600 |
| Izod impact strength (notched) | ASTM D 256 | kg·cm/cm | 55 |
| Distinctness of image | JIS K 7105 | % | 18 |

Example 6

A fiber-reinforced thermoplastic resin sheet consisting of 70% by weight of polyethylene terephthalate fiber and 30% by weight of glass fiber was produced in the same manner as in Example 5, except that the ratio of the (a) to the (b) was 1 : 1.3, the concentration of slurry after mixing of the (a) and the (b) was 1.9% by weight, and the basis weight of web was 190 g.

The coefficient of variation of basis weight of said sheet was 11 and its characteristics are as shown in Table 5.

Table 5

| Characteristics | Specification | Unit | Numerical value |
|---|---|---|---|
| Tensile break strength | ASTM D 638 | kg/cm$^2$ | 1400 |
| Izod impact strength (notched) | ASTM D 256 | kg·cm/cm | 70 |
| Distinctness of image | JIS K 7105 | % | 10 |

Example 7

There were prepared (a) a 3.0 wt% slurry containing polypropylene of MFR14 and an amine type nonionic surfactant in an amount of 0.2% by weight based on the weight of the polypropylene, and (b) a 1.0 wt% mixed-reinforcing-fiber slurry containing mixed reinforcing fiber consisting of 70% by weight of glass fiber having a fiber diameter of 10 μm and a fiber length of 6 mm and 30% by weight of glass fiber having a fiber diameter of 10 μm and a fiber length of 13 mm, and a polyethylene glycol ester type dispersant in an amount of 0.15% by weight based on the weight of the mixed reinforcing fiber. Then, the (a) and the (b) were mixed in the ratio of 1 : 30 to prepare a 1.5 wt% slurry containing the polypropylene and the mixed reinforcing fiber both in a proportion of 50% by weight, after which this slurry was diluted with water containing 0.03% by weight of a polyethylene glycol ester type dispersant to adjust its concentration to 0.4% by weight, and then made into a web having a basis weight of 260 g by means of a hand making sheet machine.

Split-treating of the reinforcing fiber was carried out in the same manner as in Example 1.

Ten pieces of the web were laminated, dehydrated by use of a press, dried subsequently at 120°C for 1 hour, heated for 16 minutes by means of a sheet forming press under conditions of a temperature of 190°C and a pressure of 10 kg/cm2, and then cooled for 20 minutes under conditions of a temperature of 25°C and a pressure of 15 kg/cm2 to form a fiber-reinforced thermoplastic resin sheet of 2 mm in thickness, whose coefficient of variation of basis weight was 9.

Characteristics of the sheet are as shown in Table 6.

Table 6

| Characteristics | Specification | Unit | Numerical value |
|---|---|---|---|
| Tensile break strength | ASTM D-638 | kg/cm$^2$ | 730 |
| Izod impact strength (notched) | ASTM D-256 | kg·cm/cm | 65 |
| Distinctness of image | JIS K 7105 | % | 15 |
| Deep drawing properties | (Note) | | 0.2 |

Note: The deep drawing properties were evaluated as follows. Using a 100 mm$\phi$ piece of the sheet, a cup-like vessel having an overhanging ratio of 1.5 was produced, and there was measured the content (% by weight) of the reinforcing fiber at each position of the vessel (sampling was conducted at 5 positions in the bottom and at 10 positions in the side wall: the sectional area at each position 3.14 cm$^2$, the number of vessels used 10). The deep drawing properties were expressed in terms of the degree of variation (V) of the reinforcing fiber content expressed by the equation described below, and the fiber-reinforced thermoplastic resin sheet was judged good in deep drawing properties when the V value was 5 or less.

$$V = \sigma/P \times 100$$

wherein   P: the average content (% by weight) of the reinforcing fiber

σ: the standard deviation of the reinforcing fiber content

The molding conditions of the cup-like vessel were as follows:  the temperature of the sheet for molding 210°C, mold temperature 25°C, molding pressure 120 kg/cm².

Example 8

There were prepared (a) a 3.5 wt% slurry containing a pulp-like nylon 66 resin having a length of main fiber of 3 mm and a polyethylene oxide-polyacrylamide type dispersant in an amount of 0.15% by weight based on the weight of the nylon 66 resin, and (b) a 0.2 wt% mixed-reinforcing-fiber slurry containing a mixed carbon fiber consisting of 70% by weight of carbon fiber having a fiber diameter of 8 μm and a fiber length of 6 mm and 30% by weight of carbon fiber having a fiber diameter of 10 μm and a fiber length of 25 mm, and a polyethylene glycol ester type dispersant and a sodium polyacrylate type thickening agent in amounts of 0.2% by weight and 10% by weight, respectively, based on the weight of the mixed carbon fiber. Then, the (a) and the (b) were mixed in the ratio of 1 : 7.5 to prepare an about 0.59 wt% slurry containing the nylon 66 resin and the mixed reinforcing resin in proportions of 70% by weight and 30% by weight, respectively, after which this slurry was diluted with water containing 0.03% by weight of a sodium polyacrylate type thickening agent, to adjust its concentration to 0.3% by weight, and then made into a web having a basis weight of 195 g by means of a hand making sheet machine.

Split-treating of the reinforcing fiber was carried out in the same manner as in Example 1.

Ten pieces of the web were laminated, dehydrated by use of a press, dried subsequently at 120°C for 1 hour, heated for 15 minutes by means of a sheet forming press under conditions of a temperature of 280°C and a pressure of 10 kg/cm², and then cooled for 20 minutes under conditions of a temperature of 25°C and a pressure of 15 kg/cm² to form a fiber-reinforced thermoplastic resin sheet of 1.5 mm in thickness, whose coefficient of variation of basis weight was 10.

Characteristics of the sheet are as shown in Table 7.

Table 7

| Characteristics | Specification | Unit | Numerical value |
|---|---|---|---|
| Tensile break strength | ASTM D-638 | $kg/cm^2$ | 2100 |
| Izod impact strength (notched) | ASTM D-256 | $kg \cdot cm/cm$ | 5 |
| Distinctness of image | JIS K 7105 | % | 12 |
| Deep drawing properties | | | 2 |

Examples 9, 10 and 11

There were prepared (a) a 3.0 wt% slurry containing polypropylene powder of MFR14 and an amine type nonionic surfactant in an amount of 0.2% by weight based on the weight of the polypropylene, and (b) a 1.0 wt% reinforcing-fiber slurry containing reinforcing fiber consisting of glass fiber having a fiber diameter of 10 μm and a fiber length of 13 mm, and a polyethylene glycol ester type dispersant in an amount of 0.15% by weight based on the weight of the reinforcing fiber. Then, the (a) and the (b) were mixed in the ratio of 1 : 3 to prepare a 1.5 wt% slurry containing the polypropylene and the reinforcing fiber both in a proportion of 50% by weight, after which this slurry was diluted with water containing 0.03% by weight of a polyethylene glycol ester type dispersant, to adjust its concentration to 0.4% by weight, and then made into a web having a basis weight of 260 g by means of a hand making sheet machine.

Split-treating of the reinforcing fiber was carried out in the same manner as in Example 1. In this case, three kinds of webs having different formations were produced by controlling the degree of stirring in the sheet machine.

Next, 10 pieces each of the web having the same formation among said three kinds of webs were laminated respectively, dehydrated by use of a press, dried subsequently at 120°C for 1 hour, heated for 16 minutes by means of a sheet forming press under conditions of a temperature of 200°C and a pressure of 10 kg/cm2, and then cooled for 20 minutes under conditions of a temperature of 15°C and a pressure of 15 kg/cm2 to form a fiber-reinforced thermoplastic resin sheet of 2 mm in thickness.

These sheets were made into 6 mm x 6 mm x 2 mm (thickness) pellets, respectively, by means of a cold-type pelletizer. Then, using these pellets, 120 mm x 80 mm x 3 mm (thickness) molded plates were formed under the injection conditions shown in Table 8.

Characteristics of the pellets used and the surface smoothness and mechanical properties of the injection-molded plates are as shown in Table 9.

Table 8

| Temperature °C | | | | | Pressure kg/cm2 | | rpm Screw revolution rate |
|---|---|---|---|---|---|---|---|
| Rear | Center | Front | Nozzle | Mold | Primary | Secondary | |
| 215 | 220 | 220 | 230 | 75 | 50 | 40 | 75 |

Table 9

| Example | Characteristics of pellets for molding | | | Physical properties of injection-molded plate | | | | |
|---|---|---|---|---|---|---|---|---|
| | Equivalent volume diameter mm | Length mm | Coefficient of variation of basis weight | Surface smoothness % | Flexural strength kg/cm2 | | Izod impact strength kg·cm/cm | |
| | | | | | MD | TD | MD | TD |
| 9 | 5.2 | 6 | 15 | 9 | 520 | 500 | 9 | 8 |
| 10 | 5.2 | 6 | 12 | 10 | 500 | 480 | 9 | 9 |
| 11 | 5.2 | 6 | 9 | 12 | 510 | 500 | 10 | 12 |

The surface smoothness of the injection-molded plates was 9 to 12%, while that of the hereinafter described injection-molded plate of Comparative Example 5 was 6%. Thus, the injection-molded plates obtained by use of the pellets of the present invention had a 50 to 100% improved surface smoothness as compared with the conventional one.

Example 12

Under exactly the same conditions as in Example 9, except that a mixture of 100 parts of the same polypropylene powder of MFR14 as used in Example 9 and 25 parts of an adhesive polypropylene (ADMER, a trade name)was used in place of the polypropylene powder of MFR14, a sheet and pellets were molded and then an injection-molded plate was produced. Characteristics of the pellets used for the production and the surface smoothness and mechanical properties of the injection-molded plate are as shown in Table 10.

Table 10

| Characteristics of pellets for molding | | | Physical properties of injection-molded plate | | | | |
|---|---|---|---|---|---|---|---|
| Equiva-lent volume diameter | Length | Coeffi-cient of varia-tion of basis weight | Surface smooth-ness | Flexural strength kg/cm$^2$ | | Izod impact strength kg·cm/cm | |
| mm | mm | | % | MD | TD | MD | TD |
| 5.2 | 6 | 11 | 11 | 770 | 720 | 17 | 15 |

Example 13

Under exactly the same conditions as in Example 9, except that in laminating 10 pieces of web and dehydrating the same by use of a press, a silane coupling agent was added by spraying in an amount of 2 parts per 100 parts of the sum of the resin and the glass fiber, a sheet and pellets were molded and then an injection-molded plate was produced.

Characteristics of the pellets for the production and the surface smoothness and mechanical properties of the injection-molded plate are as shown in Table 11.

Table 11

| Characteristics of pellets for molding | | | Physical properties of injection-molded plate | | | | |
|---|---|---|---|---|---|---|---|
| Equivalent volume diameter | Length | Coefficient of variation of basis weight | Surface smoothness | Flexural strength kg/cm² | | Izod impact strength kg·cm/cm | |
| mm | mm | | % | MD | TD | MD | TD |
| 5.2 | 6 | 13 | 11 | 1300 | 100.0 | 18 | 20 |

Example 14

Under exactly the same conditions as in Example 9, except that a mixture of 100 parts of the same polypropylene powder of MFR14 as used in Example 9 and 10 parts of silane-treated aluminum hydroxide was used in place of the polypropylene powder of MFR14, a sheet and pellets were molded and then an injection-molded plate was produced.

Characteristics of the pellets used for the production and the surface smoothness and mechanical properties of the injection-molded plate are as shown in Table 12.

Table 12

| Characteristics of pellets for molding | | | Physical properties of injection-molded plate | | | | | |
|---|---|---|---|---|---|---|---|---|
| Equiva-lent volume diameter | Length | Coeffi-cient of varia-tion of basis weight | Surface smooth-ness | Flexural strength kg/cm² | | Izod impact strength kg·cm/cm | | |
| | | | | MD | TD | MD | TD | |
| mm | mm | | % | | | | | |
| 5.2 | 6 | 8 | 13 | 640 | 610 | 4 | 16 | |

Example 15

Under exactly the same conditions as in Example 9, except that a web was produced using a Foordrinier paper machine in place of the hand making sheet machine, a sheet and pellets were produced and then an injection-molded plate was produced. By the way, the MD/TD ratio of tensile strength of the sheet after molding press was 2.7.

Characteristics of the pellets used for producing the injection-molded plate and the surface smoothness and mechanical properties of the injection-molded plate are as shown in Table 13.

Table 13

| Characteristics of pellets for molding | | | Physical properties of injection-molded plate | | | | |
|---|---|---|---|---|---|---|---|
| Equivalent volume diameter | Length | Coefficient of variation of basis weight | Surface smoothness | Flexural strength kg/cm$^2$ | | Izod impact strength kg·cm/cm | |
| mm | mm | | % | MD | TD | MD | TD |
| 5.2 | 6 | 15 | 10 | 580 | 550 | 12 | 13 |

Comparative Example 5

A 120 mm x 80 mm x 3 mm (thickness) molded plate was produced under the injection conditions shown in Table 14 by using commercially available pellets produced from polypropylene and glass fiber (fiber diameter 19 μm, fiber length 13 mm, nominal blending proportion 50% by weigh) by a pultrusion method.

Table 14

| Temperature °C | | | | | Pressure kg/cm$^2$ | | rpm Screw revolution rate |
|---|---|---|---|---|---|---|---|
| Rear | Center | Front | Nozzle | Mold | Primary | Secondary | |
| 170 | 175 | 180 | 190 | 65 | 50 | 35 | 75 |

Characteristics of the pellets used and the surface smoothness and mechanical properties of the injection-molded plate are as shown in Table 15.

Table 15

| Characteristics of pellets for molding | | | Physical properties of injection-molded plate | | | | |
|---|---|---|---|---|---|---|---|
| Equivalent volume diameter | Length | Coefficient of variation of basis weight | Surface smoothness | Flexural strength kg/cm2 | | Izod impact strength kg·cm/cm | |
| mm | mm | weight | % | MD | TD | MD | TD |
| 6.1 | 13 | 27 | 6 | 860 | 910 | 22 | 27 |

Example 16

There were produced (a) a 3 wt% nylon 66 fiber slurry containing nylon 66 fiber having a fiber diameter of 11 μm and a fiber length of 6 mm and a polyethylene oxide-polyacrylamide type dispersant in an amount of 0.15% by weight based on the weight of the nylon 66 fiber, and (b) a 0.3 wt% reinforcing-fiber slurry containing glass fiber having a fiber diameter of 10 μm and a fiber length of 13 mm and a polyethylene glycol ester type dispersant and a sodium polyacrylate type thickening agent in amounts of 0.2% by weight and 10% by weight, respectively, based on the weight of the glass fiber. Then, the (a) and the (b) were mixed in the ratio of 1 : 6.7 to prepare an about 0.65 wt% slurry containing the nylon 66 fiber and the glass fiber in proportions of 60% by weight and 40% by weight, respectively, after which this slurry was diluted with water containing 0.03% by weight of sodium polyacrylate type dispersant, to adjust its concentration to 0.3% by weight, and then made into a web having a basis weight of 195 g by means of a hand making sheet machine.

Split-treating of the reinforcing fiber was carried out in the same manner as in Example 1.

Fifteen pieces of the web were laminated, dehydrated by use of a press, dried subsequently at 120°C for 1 hour, heated for 15 minutes by means of a sheet forming press under conditions of a temperature of 280°C and a pressure of 10 kg/cm2, and then cooled for 20 minutes under conditions of a temperature of 25°C and a pressure of 15 kg/cm2 to form a fiber-reinforced thermoplastic resin sheet of 2 mm in thickness.

This sheet was made into 5 mm x 5 mm x 2 mm (thickness) pellets by means of a cold-type sheet pelletizer. Then, using the pellets, a 120 mm x 80 mm x 3 mm (thickness) molded plate was produced under the injection conditions shown in Table 16.

Characteristics of the pellets used for the production and the surface smoothness and mechanical properties of the injection-molded plate are as shown in Table 17.

Table 16

| Temperature °C | | | | | Pressure kg/cm² | | rpm Screw revolution rate |
|---|---|---|---|---|---|---|---|
| Rear | Center | Front | Nozzle | Mold | Primary | Secondary | |
| 285 | 290 | 300 | 310 | 55 | 50 | 35 | 75 |

Table 17

| Characteristics of pellets for molding | | | Physical properties of injection-molded plate | | | | |
|---|---|---|---|---|---|---|---|
| Equivalent volume diameter mm | Length mm | Coefficient of variation of basis weight | Surface smoothness % | Flexural strength kg/cm² | | Izod impact strength kg·cm/cm | |
| | | | | MD | TD | MD | TD |
| 4.6 | 5 | 13 | 11 | 2100 | 1550 | 13 | 15 |

Comparative Example 6

A 120 mm x 80 mm x 3 mm (thickness) molded plate was produced under the injection conditions shown in Example 16 by using commercially available pellets produced from nylon 66 resin and glass fiber (fiber diameter 19 µm, fiber length 13 mm, nominal blending proportion 40% by weight) by a pultrusion method.

Characteristics of the pellets used and the surface smoothness and mechanical properties of the injection-molded plate are as shown in Table 18.

Table 18

| Characteristics of pellets for molding | | | Physical properties of injection-molded plate | | | | |
|---|---|---|---|---|---|---|---|
| Equiva- lent volume diameter | Length | Coeffi- cient of varia- tion of basis weight | Surface smooth- ness | Flexural strength kg/cm$^2$ | | Izod impact strength kg·cm/cm | |
| | | | | MD | TD | MD | TD |
| mm | mm | | % | | | | |
| 6.1 | 13 | 24 | 6 | 2650 | 1750 | 22 | 24 |

INDUSTRIAL APPLICABILITY

As explained above, the fiber-reinforced thermoplastic resin sheet of the present invention is excellent in uniformity of mechanical properties and chemical resistance and hence is very effective in that there can be provided not only a fiber-reinforced thermoplastic resin sheet having a stable quality but also a fiber-reinforced thermoplastic resin sheet excellent also in surface smoothness. Therefore, its industrial utility value is very high.

Accordingly, it is useful in fields in which the uniformity of mechanical properties and surface smoothness are regarded as important, for example, it is useful as outside plates for automobile, plates for parabolic antenna or planar antenna, outside plates for various industrial or household instruments, etc.

Moreover, it does not require, for example, various after-processings for improving the surface smoothness, e.g. coating, lamination of a film, etc., and a molding die of special structure for imparting surface smoothness, and hence reduction of the production cost of the sheet can be expected.

Furthermore, the fiber-reinforced thermoplastic resin pellets of the present invention can provide, for example, extruded goods and injection-molded articles which are excellent in surface smoothness and mechanical properties, and hence they are useful for producing products in fields in which balance between surface smoothness and mechanical properties is regarded as important, for example, products such as automobile parts, parts for household electric appliances, and outside parts for industrial or household instruments. Therefore, said pellets have a high industrial utility value.

CLAIMS:

1.      A sheet or pellets which comprise a fiber-reinforced thermoplastic resin composition comprising 30 to 80% by weight of a thermoplastic resin, 70 to 20% by weight of reinforcing fiber having a fiber diameter of 3 to 20 μm and a fiber length of 1 to 50 mm, and optionally a filler (fillers), and have a coefficient of variation of basis weight of 15 or less.

2.      A sheet or pellets according to Claim 1, wherein (A) as to the size of the filler, its equivalent volume diameter in the case where its aspect ratio is less than 3, or its fiber diameter in the case where its aspect ratio is 3 or more, is one quarter or less of the diameter of the reinforcing fiber, and (B) the filler is contained in such a proportion that the coefficient of linear expansion of the fiber-reinforced thermoplastic resin composition containing the filler is 90% or less of that of a composition composed of two components, i.e., the filler and the thermoplastic resin.

3.      A sheet or pellets according to Claim 1 or 2, wherein the thermoplastic resin is a polyolefin, polyester resin, polyamide resin, polyether resin, polyoxymethylene, polycarbonate, polyphenylene sulfide, or blended resin thereof.

4.      A sheet according to Claim 1, 2 or 3, wherein the reinforcing fiber is mixed fiber consisting of (C) 60 to 95% by weight of fiber having a fiber diameter of 3 to 13 μm and a fiber length of 3 to 7 mm and (D) 40 to 5% by weight of fiber having a fiber diameter of 6 to 20 µm and a fiber length of 7 to 50 mm.

5.      A sheet according to Claim 1, 2, 3 or 4, wherein the proportion of the thermoplastic resin is 40 to 80% by weight and that of the reinforcing fiber 60 to 20% by weight.

6.      A sheet according to Claim 1, 2, 3, 4 or 5, wherein the reinforcing fiber is present therein in discrete state.

7.      Pellets obtained by pelletizing the sheet set forth in Claim 6 so as to adjust their equivalent volume diameter to 3 - 8 mm and their length to 3 - 20 mm.

8.      Pellets according to Claim 7, wherein their equivalent volume diameter is 4 - 6 mm and their length 5 - 10 mm.

# F I G. I

EP 0 386 266 A1

# F I G. 2

COEFFICIENT OF VARIATION OF FLEXURAL STRENGTH (vertical axis)

COEFFICIENT OF VARIATION OF BASIS WEIGHT (horizontal axis)

# F I G. 3

COEFFICIENT OF VARIATION OF Izod IMPACT STRENGTH (vertical axis)

COEFFICIENT OF VARIATION OF BASIS WEIGHT (horizontal axis)

# INTERNATIONAL SEARCH REPORT

International Application No PCT/JP89/00904

## I. CLASSIFICATION OF SUBJECT MATTER (if several classification symbols apply, indicate all) [6]

According to International Patent Classification (IPC) or to both National Classification and IPC

Int. Cl[4]    B29B11/16, 9/14, C08J5/04

## II. FIELDS SEARCHED

### Minimum Documentation Searched [7]

| Classification System | Classification Symbols |
|---|---|
| IPC | B29B9/14, 11/16, C08J5/04 |

### Documentation Searched other than Minimum Documentation to the Extent that such Documents are Included in the Fields Searched [8]

| | |
|---|---|
| Jitsuyo Shinan Koho | 1956 – 1988 |
| Kokai Jitsuyo Shinan Koho | 1971 – 1988 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 60-158228 (The Wiggins Teape Group Ltd.) 19 August 1985 (19. 08. 85) Claim and page 2, upper left column, line 14 to upper right column, line 16 & US, A, 4,543,288 & EP, A, 148,761 | 1, 3, 4, 5, 6 |
| Y | JP, A, 63-30209 (Marubeni Corp.) 8 February 1988 (08. 02. 88) Claim and page 2, upper left column, line 19 to lower left column, line 14 (Family : none) | 1, 3, 7, 8 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 21, 1989 (21. 11. 89) | December 4, 1989 (04. 12. 89) |
| International Searching Authority | Signature of Authorized Officer |
| Japanese Patent Office | |

Form PCT/ISA/210 (second sheet) (January 1985)